# EUROPEAN PATENT APPLICATION

(11) **EP 4 813 768 A1**
(43) Date of publication of application: **30.09.2026**
(21) Application number: 25382279.5
(22) Date of filing: 24.03.2025
(51) Int. Cl.: B60S 1/34

(54) **WIPER ARM, CORRESPONDING DEVICE AND METHOD FOR MOUNTING SAID WIPER ARM**

(71) Applicant: Doga S.A., 08630 Abrera (ES)
(72) Inventor: García Chica, Juan José, 08630 Abrera (ES)
(74) Representative: Curell Suñol S.L.P.

(57) **Abstract**

A wiper arm (A) for a windscreen wiper device (W) for wiping a windscreen surface (S) of a vehicle, comprising an arm portion (50) with a first arm end portion (3) near a driving shaft, and a second arm end portion (11) for connecting a wiper blade (B); said wiper arm (A) further comprising a hinge assembly (1) for hingedly connecting said wiper arm (A) and said driving shaft; said hinge assembly (1) comprising:
- a support member (2) for connecting to said driving shaft;
- an insert member (4), fixed inside a first hollow space (5) of said first arm end portion (3), for connecting said hinge assembly (1) and said arm portion (50) and hingedly connected to the support member (2) by articulation means (6); and
- elastic means (8) for connecting said support member (2) and said insert member (4) to each other.

## Description

### Field of the invention

The invention relates to a wiper arm for a windscreen wiper device for wiping a windscreen of a vehicle.

### State of the art

Windscreen wiper devices are widely known in the art for cleaning and wiping windscreens of all sorts of vehicles and machines, such as cars, trucks, cranes, excavators, trains or the like, and typically comprise at least one oscillating wiper arm connected to a wiper blade. Windscreens often have a curvature and there is the need to maintain optimal contact between the wiper blade and the windscreen during operation. It is also important to allow for easy separation of the wiper blade from the windscreen during maintenance or service. With that purpose, it is known to provide wiper arms comprising a hinge assembly that connects the wiper arm to the driving unit of the wiper device located on the vehicle.

The hinge assembly of a wiper arm acts as a connection between the wiper arm and the driving shaft of the wiper device and ensures that the wiper blade remains in contact with the windscreen. It also allows that the position of the wiper arm can be adapted to the curvature of the windscreen along the wiping path. The hinge device also provides enough room for the wiper arm to be separated from the windscreen to allow servicing the wiper device, for example, to change the wiper blade, when required.

Generally, wiper arms known in the art include a hinge assembly comprising a support member for connecting the wiper arm to the driving shaft of the wiper device, and articulation means for hingedly connecting the arm portion at the end of the wiper arm and the support member to each other. The hinge assembly of the wiper arms known in the art also comprises elastic means connecting said support member and said wiper arm end portion to each other such as to allow the wiper arm to be movable between a wiping position and a service position. In said wiping position, said elastic means exert a force between said support member and said wiper arm such that said wiper arm urges said wiper blade to be compressed against said windscreen, and in said service position, said elastic means allow the separation of said wiper blade from said windscreen.

While necessary for optimal performance, having to include a hinge assembly on the wiper arm presents several problems. For example, the area of the wiper arm comprising the hinge assembly needs to be able to withstand strong and repetitive mechanical stresses during operation, and the hinge assembly becomes the weakest point on the wiper arm structure and is prone to breakage. Therefore, the choice of materials for the involved components is limited. This is particularly the case in wiper arms used in industrial vehicles and machines, which often need to be longer and thus heavier, and are operated for many operation cycles. Also, the hinge assembly introduces more complexity to the wiper arm and makes the manufacturing and assembling processes of the wiper arm more challenging.

Wiper arms known in the art, such as for example the ones disclosed in documents DE102015221910 A1 and FR3028471A1, comprise a hinge assembly wherein the elastic means are fixed directly to the wiper arm end portion. This involves that the wiper arm end portion must withstand the mechanical stress occurring in this area during operation. This increases the risk of breakage and limits the choice of materials and the construction design of said wiper arm end portion. This is particularly problematic for long arms where low weight is desirable to reduce strain on the driving unit and to extend lifetime, but the use of resistant and often heavy materials is required to avoid failure due to stress around the hinge area.

### Summary of the invention

It is an object of the invention to provide a wiper arm for a windscreen wiper device for wiping a windscreen surface of a vehicle that is able to withstand strong and repetitive mechanical stresses during operation while being easy to manufacture and assemble and while allowing the use of light and aesthetical materials for its construction.

This purpose is achieved by a wiper arm for a windscreen wiper device for wiping a windscreen surface of a vehicle, said wiper arm defining an axial direction and said wiper arm comprising an arm portion comprising:
- a first arm end portion proximal to a driving shaft of said wiper device;
- a second arm end portion opposite to said first arm end portion and adapted to be connected to a wiper blade,

said wiper arm further comprising a hinge assembly for hingedly connecting said wiper arm and said driving shaft, **characterized in that**
   said hinge assembly comprises
   - a support member for connecting said hinge assembly and said driving shaft;
   - an insert member for connecting said hinge assembly and said arm portion
      - said support member and said insert member being hingedly connected to each other by articulation means, such that said insert member is movable between a wiping position and a service position; and
   - elastic means for connecting said support member and said insert member to each other, such that in said wiping position, said elastic means exert a force between said support member and said insert member such that said insert member urges said wiper blade to be compressed against said windscreen, and in said service position said insert member allows the separation of said wiper blade from said windscreen,
said insert member being coupled inside said first arm end portion and fixedly connects said hinge assembly to said arm portion.

The wiper arm according to the invention has several advantages over the prior art. By means of having the insert coupled inside the first arm end portion of the wiper arm and fixedly connecting the hinge assembly to said wiper arm, all the stress that occurs during operation around the hinge area, particularly at said first arm end portion, is spread across said first arm end portion, thus reducing the risk of breakage in this area and extending the useful lifespan of the wiper arm. Also, because the wiper arm according to the invention, particularly the hinge assembly according to the invention, distributes the stress load occurring around the hinge assembly area, a wider range of light but potentially less resistant materials, such as for example polymer-based materials or composites, for example, carbon fibre composites, can be used for the construction of the arm end portion, or more preferably for the construction of the whole wiper arm, without risk of breakage. The solution according to the invention also eliminates the need for reinforcement components to be arranged on the wiper arm end portion to ensure its stability during operation. The invention also allows for an improved freedom of design with regards to the external appearance of the wiper arm, including its shape and geometry. The invention also allows to better hide the hinge mechanism, thus reducing the need of using additional components to that end, and allowing to reduce the number of materials and parts needed to achieve a uniform and more aesthetical external appearance of the wiper arm, thus simplifying its manufacturing and assembling processes.

It is another object of the invention to provide a wiper device comprising a wiper arm according to the invention.

The invention also seeks to solve the problem of facilitating an easy assembly of the wiper arm.

To this end it is a further object of the invention to provide a method for mounting a wiper arm according to the invention, said method comprising in any order the steps of:
[a] applying adhesion means to said insert member, and
[b] inserting said insert member in said first hollow space of said first arm end portion.

The invention further includes a number of preferred features that are object of the dependent claims and the utility of which will be highlighted hereinafter in the detailed description of an embodiment of the invention.

Preferably, said insert member is coupled inside a first hollow space provided in said first arm end portion.

In a preferred embodiment of the wiper arm according to the invention seeking to better distribute the stress load on the insert, said insert member has an elongated shape in said axial direction, and said insert member comprises a fitting portion for fitting said insert member inside a first hollow space provided said first arm end portion, and a connection portion for connecting said elastic means to said insert member, and said connection portion is arranged downstream from said fitting portion in said axial direction such that said connection portion is arranged inside said first arm end portion. While the fitting portion of the insert serves the purpose of fixedly connecting the hinge assembly to the wiper arm end and allows to transmit the oscillating movement generated by the wiper shaft, the connection portion of the insert allows an efficient transmission of the force exerted by the elastic means to wiper arm in the wiping position. In combination , this allows the various stresses affecting the hinge assembly area to be distributed thus reducing the risk of stress overload and breakage around the hinge assembly.

Preferably, said insert member fixedly connects said hinge assembly to said wiper arm via adhesion means applied on said insert member, preferably applied on said fitting portion of said insert member.

Preferably, said fitting portion comprises a recess, said recess forming a gap between an internal surface of said first hollow space and said insert member. Having this recess in the fitting portion and thus the between an internal surface of said first hollow space and said insert member allows the provision of an adequate surface to apply adhesive means to fixedly connect the insert member to the first arm end portion. Because the gap serves as adhesion surface, the remaining part of the fitting portion can still be shaped to match the shape of the first hollow space of the first arm end portion thus ensuring the connection between the hinge device and the first arm end portion remains able to withstand stress during operation.

Preferably, said insert member fixedly connects said hinge assembly to said wiper arm via adhesion means applied in said recess of the said fitting portion of said insert.

In a further preferred embodiment, said recess is a perimetral recess extending around the perimeter of said fitting portion. This allows to maximize the adhesion surface and to ensure a strong and sealed connection of the insert member within the first hollow space of the arm end portion thus reducing the risk of breakage and the accumulation of liquid within the arm.

Preferably, said fitting portion comprises two outer fitting surfaces and said recess is arranged between said two outer fitting surfaces. Having the recess between two outer fitting surfaces is particularly advantageous to distribute the load along the insert member and across the adhesion area between the insert member and the first arm end portion. This also allows for a better fitting of the insert member within the first hollow space of the first arm end portion, thus limiting the wiggle room around the adhesion area, and improving the resistance of this area and prolonging the lifespan of the wiper arm.

In a preferred embodiment, said fitting portion comprises a first outer fitting surface and a second fitting outer surface, said first outer fitting surface and said second fitting outer surface each being configured as a perimetral annular ring on said fitting portion and wherein said recess is arranged between said first and second outer fitting surfaces. This preferred configuration allows the adhesion means to be applied to the recess and to remain confined between said perimetral annular rings on said fitting portion of the insert member. This reduces the risk of said adhesive means spreading beyond the adhesion area, thus ensuring adhesion occurs between the correct areas of the insert and the wiper arm end portion. This also reduces the need to eliminate any excess adhesion means that may remain after assembling the arm, thus simplifying the assembly of the wiper arm and improving its aesthetical final appearance.

Preferably, said fitting portion comprises a second hollow space extending inside said fitting portion, and said articulation means comprise an articulation axis transversal to said axial direction, and said support member and said insert member are hingedly connected around said articulation axis, and said articulation axis crosses said fitting portion at an intermediate position in said axial direction, such that said support member is at least partially arranged inside said second hollow space. This allows for an increased resistance of the articulation means and for a more compact overall configuration of the hinge assembly. In this preferred embodiment the hiding of the hinge mechanism is also improved thus further reducing the need of additional components to that end and allowing uniform and more aesthetical external appearance of the wiper arm.

In a further preferred embodiment, said hinge assembly further comprises a shaft, said shaft extending along said articulation axis, such that said support member and said insert member are hingedly connected around said shaft.

In another preferred embodiment said connection portion comprises attachment means for connecting said elastic means to said connection portion, said attachment means being located at an end of said connection portion distal from said articulation means, and said second hollow space extends inside said connection portion in said axial direction and leads to said attachment means, and said elastic means are arranged inside said second hollow space and are attached to said attachment means. This allows the elastic means to be completely enclosed within the insert member, thus providing a more resilient and compact design of the hinge assembly and a more aesthetical appearance of the wiper arm without sacrificing performance.

In a further preferred embodiment, said connection portion comprises a first wall and a second wall opposite to each other, each of said first wall and second wall projecting respectively from two opposite surfaces, more preferably side surfaces, of said fitting portion, such that said second hollow space extends between said first wall and said second wall across said connection portion, and said attachment means are a crossbar element connecting said first wall and said second wall, and said elastic means are connected to said insert member at said cross bar element. This configuration allows the connection portion of the insert member to have sufficient resistance to stress while reducing the amount of used material, thus reducing the weight of the hinge assembly.

It also allows an easy connection of the elastic means to the connection portion of the insert member, thus simplifying the assembly of the wiper arm.

In another preferred embodiment, said insert member has a longitudinal cross-section substantially tapering in said axial direction from said fitting portion to said connection portion. This preferred shape of the insert member allows for a sufficient structural resistance of the insert member combined with a minimum weight, thus resulting in an improved performance and increase lifespan of the wiper arm and related parts.

Preferably, a first through-opening is arranged on said first arm end portion at a position such as to allow a fluidic connection between said gap and the space surrounding said first arm end portion. This simplifies the assembly of the wiper arm because it allows to apply the adhesive means to the surface of the insert member, particularly to the recess area, when the arm end portion is coupled with the insert member. This avoids having to manipulate the insert member with the adhesive applied thereon, thus reducing the risk of the adhesive ending up in other parts of the wiper arm and making the assembly of the wiper arm less cumbersome and more efficient. The combination of though-hole on the arm end portion and the recess on the insert member allows to ensure that the adhesive is easily applied only to the desired area.

In a preferred embodiment of the invention, said support member comprises support attachment means for attaching said support member to said driving shaft, and said first arm end portion comprises and second through-opening arranged at a position such as to allow access to said support attachment means.

Preferably, said arm portion is made of a polymer-based material or composite, such as for example a carbon fibre composite. More preferably, said arm portion is made of a carbon fibre composite. In a preferred embodiment where the wiper arm according to the invention the arm portion is made of a polymer-based material or composite, such as for example a carbon fibre composite, the solution according to the invention is particularly advantageous. Polymer based materials or composites, such as carbon fibre composites combine several desirable mechanical properties, such as the low weight, and aesthetic properties such as providing a variety of external finishings at a reduced cost, but are limited in terms of their use in wiper arms due to the need to satisfy the mechanical constraints intrinsic to this application, such as providing a sufficient mechanical resistance. The wiper arm according to the invention allows to avoid these limitations.

Preferably, the wiper arm according to the invention is a wiper arm for use in wiper device on the frontal windscreen of a vehicle. The frontal wiper devices in vehicles are subjected are subjected to higher stresses and longer operation cycles in comparison with, for example, back windscreen wiper device, and therefore the wiper arm according to the invention is particularly advantageous for this type of applications.

In a preferred embodiment of the method according to the invention, said wiper arm is a wiper arm according to any of the embodiments described above, and in step [a] said adhesion means are applied to said fitting portion.

In another preferred embodiment of the method according to the invention, in step [a] said adhesion means are applied to said recess. More preferably, said step [b] is performed before step [a], and said adhesion means are applied to said recess through said first through-opening.

Being able to apply the adhesion means once the wiper arm is fully assembled reduce the risk of said adhesive means ending up on parts of the wiper arm where it should not be applied. It also speeds up the assembling process and reduces the risk of errors and interruptions in the assembly chain.

Preferably, the method according to the invention further comprises a step [c] of assembling the hinge assembly. In a further preferred embodiment, step [c] is performed before steps [a] and [b]. Being able to mount or assemble the hinge assembly, which is the more complex component of the wiper arm, independently of the arm portion, to then be able to couple said hinge assembly to the arm end portion allows for a more efficient assembly of the wiper arm.

### Brief description of the drawings

Further advantages and features of the invention will become apparent from the following description, in which, without any limiting character, preferred embodiments of the invention are disclosed, with reference to the accompanying drawings in which:
Figure 1A shows an example of a wiper device according to the invention, comprising a wiper arm that is connected to a wiper blade.
Figure 1B shows a wiper arm according to the invention. The arrows represent the movement of the wiper arm towards different usage positions: a service position, that allows the separation of the wiper blade (not shown) from the windscreen, and a wiping position wherein the insert member is configured to urge said wiper blade (not shown) to be compressed against a windscreen. The arm portion is represented with dotted lines in the wiping and service positions, and with solid lines in an intermediate position.
Figure 1C shows a wiper arm with the hinge assembly not connected to the arm portion.
Figure 1D shows the wiper arm of Figure 1C in an assembled position.
Figure 1E shows the assembled wiper arm of Figure 1D, wherein the arm portion, has been made transparent in order to show the hinge assembly inserted thereto.
Figure 2 is a detail view of an insert member of the hinge assembly of the previous figures.
Figure 3 is a detail view of the insert member of Figure 2, in an assembled position wherein part of the structure has been made transparent in order to show said insert member.
Figure 4 is an exploded view of the hinge assembly.
Figure 5 is a detail section view of the wiper arm in an assembled position showing the first arm end portion.
Figure 6 is a detail bottom view of the assembled wiper arm of the Figure 5.
Figure 7 shows a detail section view of the wiper arm in an assembled position showing the first arm end portion having an alternative embodiment of the support element.

### Detailed description of embodiments of the invention

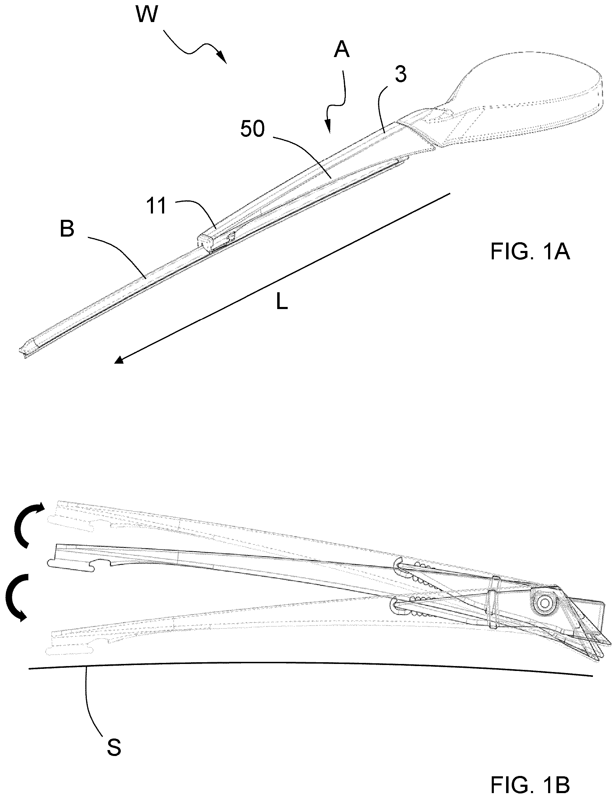

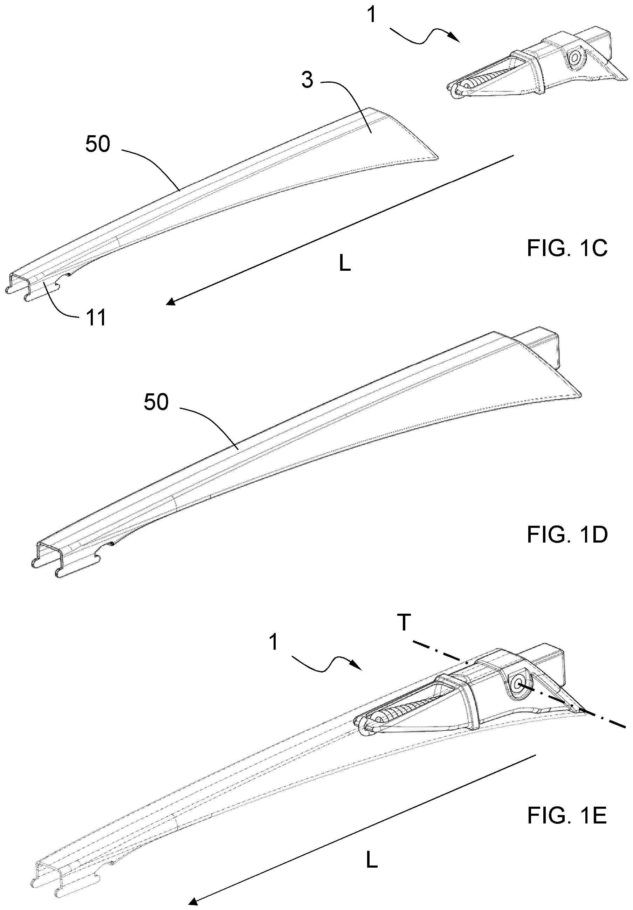

Fig. 1A shows a first exemplary embodiment of a wiper device W according to the invention, for moving a wiper blade B and wiping a windscreen surface S of a vehicle. The wiper device W of Fig. 1A comprises a first exemplary embodiment of a wiper arm A which is shown in more detail in Fig. 1B to Fig. 6.

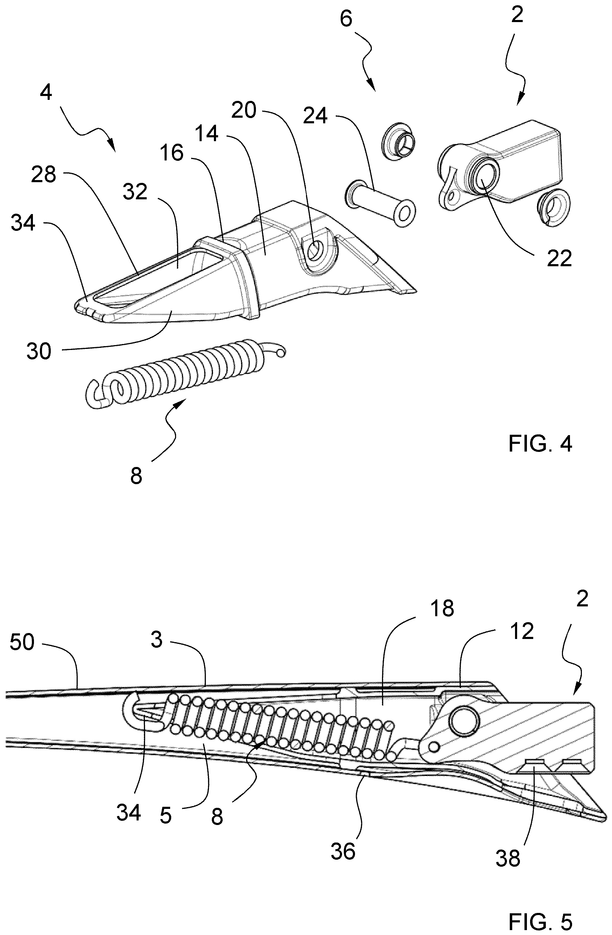

The wiper arm A of the first exemplary embodiment defines an axial direction L represented with an arrow in Fig. 1A, 1C and 1E. The wiper arm A has an arm portion 50 with two opposite end portions: a first arm end portion 3 that is proximal to a driving shaft of the wiper device W, and a second arm end portion 11 that is distal to said driving shaft, opposite to the first arm end portion 3. The first arm end portion 3 has a first hollow space 5 as shown in Fig. 5. The second arm end portion 11 is adapted to be connected to a wiper blade B, as shown in Fig. 1A. For the sake of clarity, all the figures show one specific type of second arm end portion 11, however, different adaptations of the second arm end portion 11 may be envisaged for different embodiments depending on the characteristics of the wiper blade B.

As shown in Fig. 1C, the wiper arm A further comprises a hinge assembly 1. Said hinge assembly 1 is arranged for hingedly connecting the arm portion 50 of the wiper arm A and the driving shaft of the wiper device W. Fig. 1B is a schematically depicture of the hinged movement of the wiper arm A.

The exploded view of Fig. 4 shows that the hinge assembly 1 comprises two main elements, a support member 2 and an insert member 4. In particular, the support member 2 is arranged for connecting the hinge assembly 1 and the driving shaft; and the insert member 4 is arranged for connecting the hinge assembly 1 and the arm portion 50 of the wiper arm A. These two members are hingedly connected to each other by articulation means 6 and also by elastic means 8, such that the insert member 4 and, consequently, also the arm portion 50, is movable between a wiping position and a service position. In the case of the first embodiment, said elastic means 8 is a helical coil spring. In the wiping position, the elastic means 8 exert a force between the support member 2 and the insert member 4 such that said insert member 4 urges the wiper blade B to be compressed against the windscreen S. In the service position, the insert member 4 allows the separation of said wiper blade B from said windscreen S. Said insert member 4 is coupled inside the first hollow space 5 that is provided in the first arm end portion 3 of the arm portion 50 and fixedly connects the hinge assembly 1 to said arm portion 50.

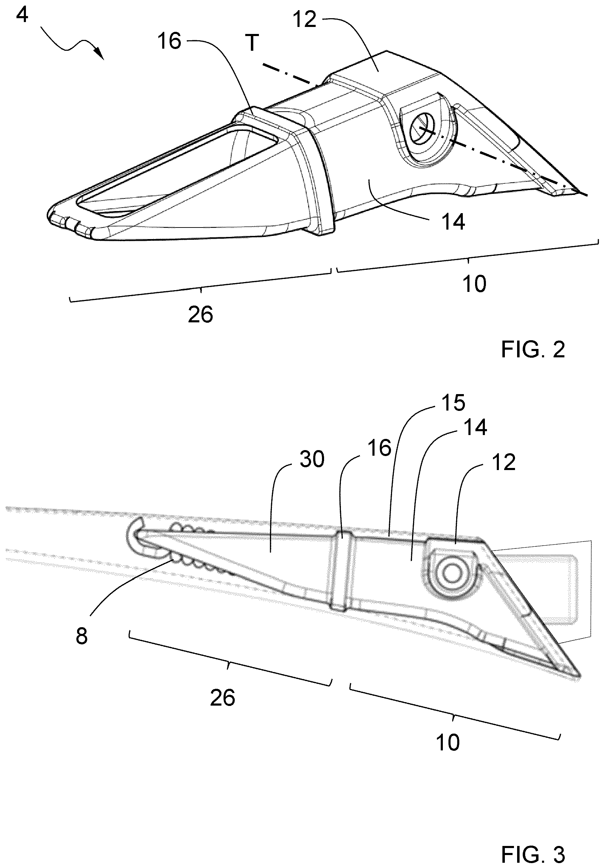

Fig. 2 shows a detailed view of the insert member 4 according to the first exemplary embodiment. The insert member 4 has shape that is elongated in the axial direction L and comprises a fitting portion 10 and a connection portion 26. The fitting portion 10 is configured for fitting and securing the insert member 4 inside the first hollow space 5 of the first arm end portion 3, while the connection portion 26 is configured for connecting the elastic means 8, in this embodiment the coil spring, to the insert member 4. Fig. 3 shows the insert member 4 with the elastic means 8 attached and inserted into the hollow first space 5 of the first arm end portion 3. As shown in Fig. 2 and Fig. 3, the connection portion 26 is arranged downstream from the fitting portion 10 in the axial direction L such that the connection portion 26 is also arranged inside the first hollow space 5. The fitting portion 10 has a recess 14 arranged between two outer fitting surfaces 12, 16, in particular, a perimetral recess extending around the perimeter of the fitting portion 10 and forming a gap 15 between an internal surface of the first hollow space 5 and the fitting portion 10 of the insert member 4. In the first embodiment, the outer fitting surfaces 12, 16 are each configured as a perimetral annular ring on said fitting portion 10, such that the recess 14 is located between the first outer fitting surface 12 and the second outer fitting surface 16.

As shown in Fig. 1E, the articulation means 6 are articulated around an articulation axis T which is transversal to the axial direction L. The support member 2 and the insert member 4 are hingedly connected around said articulation axis T, which crosses the fitting portion 10 at an intermediate position in the axial direction L. In this embodiment, said articulation axis T extends inside a first articulation through-hole 20 arranged on said insert member and a second articulation through-hole 22 arranged on said support member. In the assembled position of the hinge assembly 1, said first and second articulation through-holes 20, 22, are aligned to one another. The hinge assembly further comprises a shaft 24 extending along the articulation axis T, said shaft 24 being arranged within said first and second articulation through-holes 20, 22, such that the support member 2 and the insert member 4 are hingedly connected around said shaft 24. In this embodiment, the articulation means also comprise two sleeves 52 each located at one side of the support member, said sleeves fitting in said second through-hole 22 and covering the area around said second through hole 22 such as to reduce the friction between said support member and said insert member. Other embodiments of said articulation means 6 are considered within the scope of the invention as long as they allow the insert member and the support member to be hingedly connected.

In a particular embodiment of the hinge assembly, the fitting portion 10 has a second hollow space 18 therein, and the support member 2 is partially arranged inside the second hollow space 18, as shown in Fig. 5. In the exploded view of Fig. 4 and the section view of Fig. 5 it can be appreciated that the connection portion 26 has attachment means 34 for connecting said elastic means 8 to said connection portion 26. The attachment means 34 are located that the end of the connection portion 26 that is more distal form the articulation means 6. In this embodiment, the second hollow space 18 extends between two opposite walls 28, 30 inside the connection portion 26 in the axial direction L and leads to the attachment means 34, so that the elastic means 8 can be arranged inside the second hollow space 18 and attach to the attachment means 34. Each of said opposite walls 28, 30 projects from one of two respective opposite surfaces of the fitting portion 10 and a crossbar element connects the two opposite walls 28, 30. Said crossbar element is provided with a notch for attaching the coil spring.

The figures, in particular Fig. 3, show that the insert member 4 of the first embodiment has a longitudinal cross-section substantially tapered in the axial direction L from the fitting portion 10 to the connection portion 26, so that it can be inserted in the first hollow space 5 inside the arm portion 50.

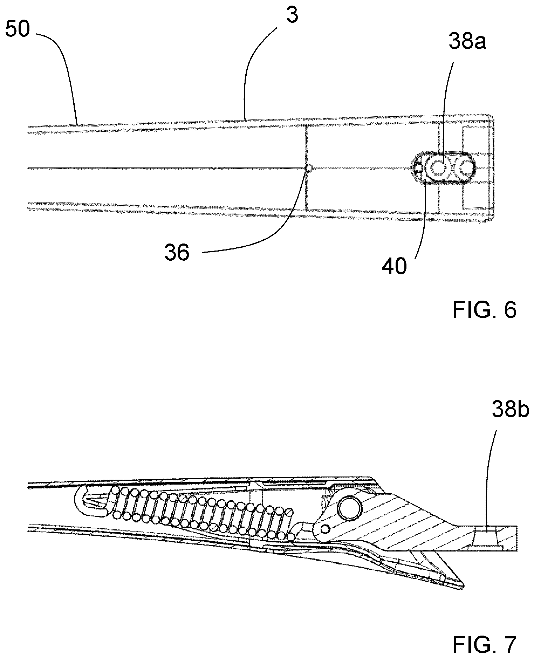

Fig. 5 and Fig. 6 show a first through-opening 36 arranged on the first arm end portion 3 at a position such as to allow a fluidic connection between the gap 15 and the space surrounding said first arm end portion 3. Said figures also show that the support member 2 has support attachment means 38a that are configured for attaching said support member 2 to the driving shaft. The location and shape of said first through-opening 36 can be adapted to the various possible embodiments of the invention with regards to said recess 14 and said gap 15.

As also shown in Fig. 6, the first arm end portion 3 is further provided with a second through-opening 40 that is arranged at a position such as to allow access to said support attachment means 38a. Fig. 7 shows an alternative embodiment of the support element having alternative support attachment means 38b. Said support attachment means 38a, 38b can be adapted to the type of driving shaft on which the arm needs to be mounted.

The different components of wiper arm A according to the invention can be manufactured using the usual materials known in the art to manufacture wiper arms, including for example metallic materials such as aluminium or steel. As mentioned, the wiper arm according to the invention allows for an increased flexibility in the choice of materials for the different components. For example, the wiper arm according to the invention allows the use of alternative materials such as polymer-based materials or composites, and carbon fibre composites for the manufacture of the arm portion 50, or of the first arm end portions 3. These alternative materials, which can be lighter and aesthetically more appealing, thus desirable, particularly benefit from the advantages provided by the invention because these alternative materials are often more prone to breakage. Also, for example, the insert member 4 and the support member 2 of the hinge assembly 1 according to the invention can be manufactured of the same or of different materials, including steel, aluminium, or other alternative materials such as polymer-based materials or composites depending on the intended application of the wiper arm. For example, in less demanding applications in terms of mechanical resistance, such as in back windscreen wiper devices, the support member 2 could be made of a polymer-based material, thus reducing cost, while in more demanding applications such as in frontal windscreen wiper devices, where the mechanical properties of the different components have to meet higher performance requirements, the insert member 4 could be manufactured in titanium.

The invention further refers to a method for mounting a wiper arm A according to the embodiments discussed above. In a first embodiment of the method, it comprises the following steps:
[a] applying adhesion means to said insert member 4, in particular to the recess 14 of the fitting portion 10 of the said insert member 4; and
[b] inserting said insert member 4 in said first hollow space 5 of said first arm end portion 3.

In a second embodiment of the method, step [b] is performed before step [a], and the adhesion means are applied to the recess 14 through the first through-opening 36, after the insert member 4 is inserted in the first hollow space 5 of the first arm end portion 3. In this case, the adhesion means is an adhesive in a liquid or paste form that can flow through said first through-opening 36.

## Claims

1. A wiper arm (A) for a windscreen wiper device (W) for wiping a windscreen surface (S) of a vehicle, said wiper arm (A) defining an axial direction (L) and said wiper arm (A) comprising an arm portion (50) comprising:
- a first arm end portion (3) proximal to a driving shaft of said wiper device (W);
- a second arm end portion (11) opposite to said first arm end portion (3) and adapted to be connected to a wiper blade (B),
said wiper arm (A) further comprising a hinge assembly (1) for hingedly connecting said wiper arm (A) and said driving shaft, **characterized in that** said hinge assembly (1) comprises
- a support member (2) for connecting said hinge assembly (1) and said driving shaft;
- an insert member (4) for connecting said hinge assembly (1) and said arm portion (50)
- said support member (2) and said insert member (4) being hingedly connected to each other by articulation means (6), such that said insert member (4) is movable between a wiping position and a service position; and
- elastic means (8) for connecting said support member (2) and said insert member (4) to each other, such that in said wiping position, said elastic means (8) exert a force between said support member (2) and said insert member (4) such that said insert member (4) urges said wiper blade (B) to be compressed against said windscreen (S), and in said service position said insert member (4) allows the separation of said wiper blade (B) from said windscreen (S),
said insert member (4) being coupled inside said first arm end portion (3) and fixedly connects said hinge assembly to said arm portion (50).

2. The wiper arm (A) according to claim 1, wherein said insert member (4) has an elongated shape in said axial direction (L), and said insert member (4) comprises
a fitting portion (10) for fitting said insert member (4) inside said first hollow space (5) of said first arm end portion (3), and
a connection portion (26) for connecting said elastic means (8) to said insert member (4), and
wherein said connection portion (26) is arranged downstream from said fitting portion (10) in said axial direction (L) such that said connection portion is arranged inside said first hollow space (5).

3. The wiper arm (A) according to claim 2, wherein said fitting portion (10) comprises a recess (14), said recess forming a gap (15) between an internal surface of said first hollow space (5) and said insert member (4).

4. The wiper arm (A) according to claim 3, wherein said recess (14) is a perimetral recess extending around the perimeter of said fitting portion (10).

5. The wiper arm (A) according to any one of claims 3 or 4, wherein said fitting portion (10) comprises two outer fitting surfaces (12, 16), and wherein said recess (14) is arranged between said two outer fitting surfaces (12, 16).

6. The wiper arm (A) according to claim 5, wherein said fitting portion (10) comprises a first outer fitting surface (12) and a second fitting outer surface (16), said first outer fitting surface (12) and said second fitting outer surface (16) each being configured as a perimetral annular ring on said fitting portion (10) and wherein said recess (14) is arranged between said first and second outer fitting surfaces (12, 16).

7. The wiper arm (A) according to any one of claims 2 to 6, wherein said fitting portion (10) comprises a second hollow space (18) inside said fitting portion (10), and wherein said articulation means (6) comprise an articulation axis (T) transversal to said axial direction (L), and wherein said support member (2) and said insert member (4) are hingedly connected around said articulation axis (T), and wherein said articulation axis (T) crosses said fitting portion (10) at an intermediate position in said axial direction (L), such that said support member (2) is at least partially arranged inside said second hollow space (18).

8. The wiper arm (A) according to claim 7, wherein said hinge assembly (1) further comprises a shaft (24), said shaft (24) extending along said articulation axis (T), such that said support member (2) and said insert member (4) are hingedly connected around said shaft (24).

9. The wiper arm (A) according to any one of claims 7 or 8, wherein said connection portion (26) comprises attachment means (34) for connecting said elastic means (8) to said connection portion (26), said attachment means (34) being located at an end of said connection portion distal from said articulation means (6), and wherein said second hollow space (18) extends inside said connection portion (26) in said axial direction (L) and leads to said attachment means (34), and wherein said elastic means (8) are arranged inside said second hollow space (18) and are attached to said attachment means (34).

10. The wiper arm (A) according to claim 9, wherein said connection portion (26) comprises a first wall (28) and a second wall (30) opposite to each other, each of said first wall (28) and second wall (30) projecting respectively from two opposite surfaces of said fitting portion (10), such that said second hollow space (18) extends between said first wall (28) and said second wall (30) across said connection portion (26), and
wherein said attachment means (34) are a crossbar element connecting said first wall (28) and said second wall (32), and said elastic means (8) are connected to said insert member (4) at said cross bar element.

11. The wiper arm (A) according to any one of claims 2 to 10, wherein said insert member (4) has a longitudinal cross-section substantially tapering in said axial direction (L) from said fitting portion (10) to said connection portion (26).

12. The wiper arm (A) according to any one of claims 3 to 11, wherein a first through-opening (36) is arranged on said first arm end portion (3) at a position such as to allow a fluidic connection between said gap (15) and the space surrounding said first arm end portion (3).

13. The wiper arm (A) according to any one of claims 1 to 12, wherein said support member (2) comprises support attachment means (38) for attaching said support member (2) to said driving shaft, and said first arm end portion (3) comprises a second through-opening (40) arranged at a position such as to allow access to said support attachment means (38).

14. A wiper device (W) comprising a wiper arm (A) according to any one of the preceding claims.

15. A method for mounting a wiper arm (A) as defined in claim 12 when depending on any one of claims 3 to 6, said method comprising the steps of:
[a] applying adhesion means to said insert member (4), and
[b] inserting said insert member (4) in said first hollow space (5) of said first arm end portion (3)
wherein step [b] is performed before step [a], and wherein said adhesion means are applied to said recess (14) through said first through-opening (36).
